# EUROPEAN PATENT SPECIFICATION

(11) **EP 0 402 008 B1**
(45) Date of publication and mention of the grant of the patent: **08.02.1995**
(21) Application number: 90305646.3
(22) Date of filing: 24.05.1990
(51) Int. Cl.: H02K 3/28, H02K 23/00, H02K 27/04, H02P 5/418, H02K 23/64

(54) **Improvement of series excitation motor (1)**
Motor mit Serien-Erregung
Moteur d'excitation en série

(30) Priority: 25.05.1989 GB 8911991
(43) Date of publication of application: 12.12.1990
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

## Description

### SUMMARY OF THE INVENTION

Traditional AC series excitation motor has been widely applied to electrical tools, electrical applicanc- es, for instance: air-compressor, lifting capstan, jack etc., for for driving purposes.

Accompanied by people's outdoor activities increasing, aforesaid devices also have been widely made to be driven by DC motor with power supply of 12V or 24V or 36V low voltage DC. The present invention relates to a design in accordance with aforesaid trend for installing magnetic winding, voltage drop winding having smaller linear diameter to enable series excitation motor to provide dual DC motor which is able to be engaged in high voltage AC drive or low voltage DC drive; by means of line switch, it is applicable to aforesaid power supply of high voltage AC or low voltage DC and it is further able to be engaged in speed (or torsion) adjustment.

Attention is drawn to US-A-3668 491 which discloses an electric motor arrangement as set out in the preamble of Claim 1.

### BRIEF DESCRIPTION OF THE DRAWINGS

Fig. 1 is a view shows auto-coupling coil type voltage drop magnetic winding is installed to be engaged in high voltage AC drive.
Fig. 2 is a view shows auto-coupling coil type voltage drop magnetic winding is installed to be engaged in low voltage DC drive.
Fig. 3 is a view shows the circuit as shown in Figs. 1 and 2 has utilized dual-end plug type socket to be engaged in high/low voltage connection switch circuit.
Fig. 4 is a view shows the circuit utilizing dual-end plug type socket to be engaged in high/low voltage connection switch circuit.
Fig. 5 is a view shows multiple-set speed change draw head circuit is consisted of auto-coupling coil or low voltage winding.
Fig. 6 is a view shows motor as shown in Figs. 1 and 2 is applied to high voltage AC and low voltage DC dual circuit with recharging function.
Fig. 7 is a view shows the circuit as shown in Fig. 6 is under recharging state.
Fig. 8 is a view shows the circuit as shown in Fig. 6 is under the state of high voltage AC series excitation drive.
Fig. 9 is a view shows the circuit as shown in Fig. 6 is under the state of low voltage DC series excitation drive.
Fig. 10 is a view shows motor as shown in Figs. 1 and 2 is applied to high voltage AC and low voltage DC dual circuit with recharging function.
Fig. 11 is a view shows the circuit as shown in Fig. 10 is under recharging state.
Fig. 12 is a view shows the circuit as shown in Fig. 10 is engaged in low voltage DC series excitation drive.

### DESCRIPTION OF THE INVENTION

Traditional series excitation motor usually comprises a series of a magnetic field coil and an armature coil, provided for driving various tools/equipments such as electric tools, electric appliance, air compressor etc. We have known load current for such AC series excitation motor is determined by its voltage/impedance and its impedance includes flip-flop armature (FMF) and armature resistance, armature reactance and magnetic field impendance, reactance. Aforesaid FMF is influenced by the load having little relationship to AC/DC power supply; while under AC power supply armature reactance and magnetic field reactance would provide inductive voltage reduction; under DC power supply, no inductive shall exist. Though aforesaid different series excitation motor can provide for AC-DC dual purposes, however, in case AC voltage has a greater difference with DC voltage, low voltage DC input may cause its power output being decreased a great lot more than that of higher voltage AC input.

According to independent claim 1, the present invention relates to a design for improving aforesaid defects and is engaged in co-polarity series mainly by means of magnetic field installing auto-coupling coil type voltage drop winding with smaller linear diameter and low voltage magnetic field winding to provide high voltage AC operation; under low voltage DC it still can operate by means of low voltage field winding with bigger linear diameter and armature series alone.

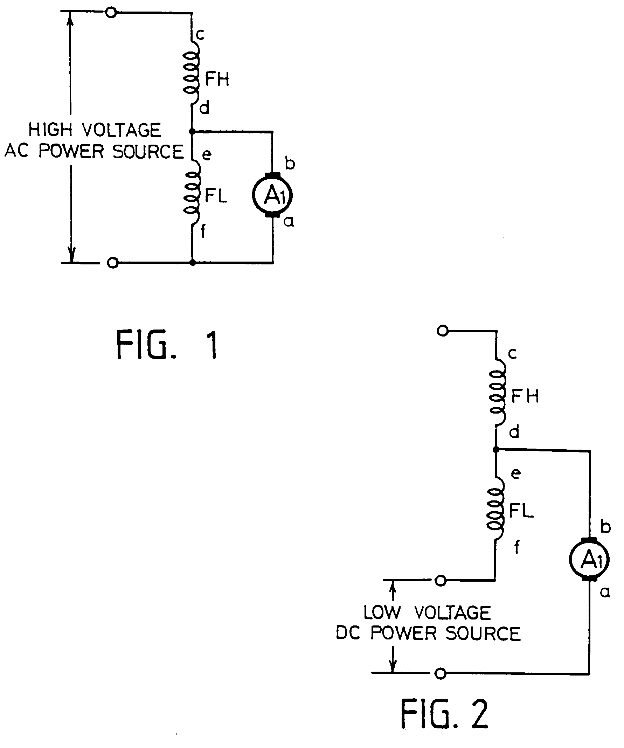

As shown in Figs. 1 and 2, auto-coupling coil type field voltage drop winding FH with smaller linear diameter and low voltage field winding FL are engaged in co-polarity series; high voltage AC is input from its both ends c and f to form auto-coupling transformer effect; while armature A1 is parallel to both ends e and f of low voltage field winding to enable low voltage field winding to output current conduction through armature to drive motor; under low voltage DC input, one end of DC power conducts through terminal end f of low voltage field winding, common contact points b, e and d of armature, low voltage field winding and high voltage field winding and then passes through armature to another end of low voltage DC power to drive DC motor.

The switch between aforesaid high voltage AC and low voltage DC includes various types of hand-dial or wrench switch or relay or plug type socket for switching connection, which also includes relay for switching counter connection by means of power property detection.

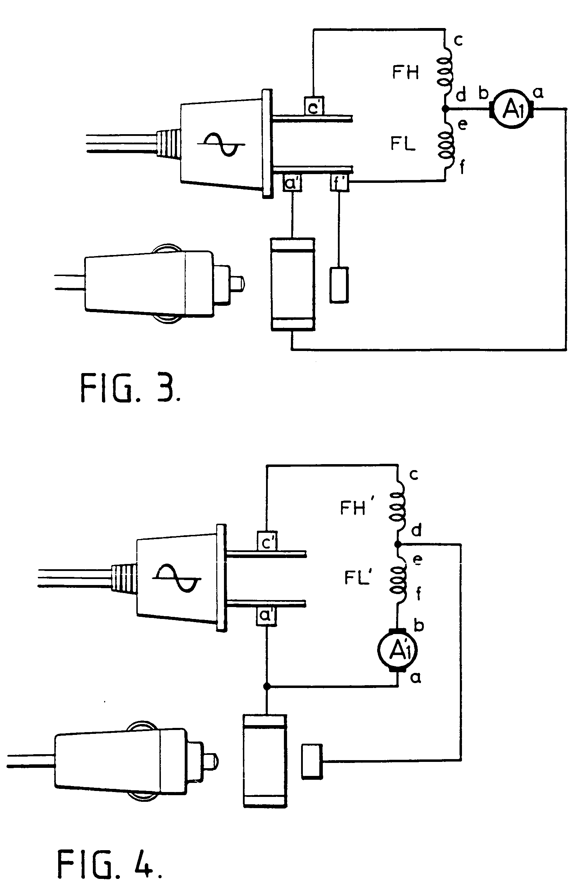

Hand-dial or wrench or relay type switch will not be described herein because they have been well known. In Fig. 3, the circuit as shown in Figs. 1 and 2 is engaged in high/low voltage connection switch by means of dual-end plug type socket, in which, the features of the structure of plug type connection switch socket lie in:
One set of traditional household plug having two sets of electrode and one set of DC low voltage plug having two sets of electrode conduct each other by means of two sets of conductor;
One low voltage socket is installed on loaded electrical appliance to allow low voltage plug to plug therein; both electrodes of low voltage socket conduct to one end a of armature and end f of low voltage field winding respectively;
Another socket is installed on loaded electrical appliance to allow household plug to plug therein; one contact point C' on one side of interior socket accepting both electrodes of plug is provided for connecting end C of high voltage field winding, and another side has two sets of contact point; one of contact point a' connects power end a of armature and one electrode of low voltage socket; another contact point f connects end f of connector of field winding; aforesaid contact points a' and f' are installed by insulation status; when household plug plugs in they appear in conduction state and the features thus lie herein. By means of aforesaid structure, when household plug plugs in, motor appears in low voltage connection state; when household plug is pulled out, motor appears in high voltage connection state.

In Fig. 4, the circuit is engaged in high/low voltage connection switch by means of dual-end plug type socket. In which, it still has:
One set of traditional household plug having two sets of electrode and one set of DC low voltage plug having two sets of electrode conduct each other by means of two sets of conductor;
One low voltage socket is installed on loaded electrical appliance to allow household plug to plug therein; two electrodes of low voltage socket conduct to the end a of armature and series point e between low voltage field winding and high voltage field winding;
Another socket is installed on loaded electrical appliance to allow household plug to plug therein; one contact point C' on one side of interior socket accepting both electrodes of plug is provided for connecting end C of high voltage field winding, and one contact point a' on another side connects power end a of armature and one electrode of low voltage socket; by means of aforesaid structure, when household plug plugs in, motor appears in low voltage connection state; when household plug is pulled out of low voltage socket, motor appears in high voltage connection state.

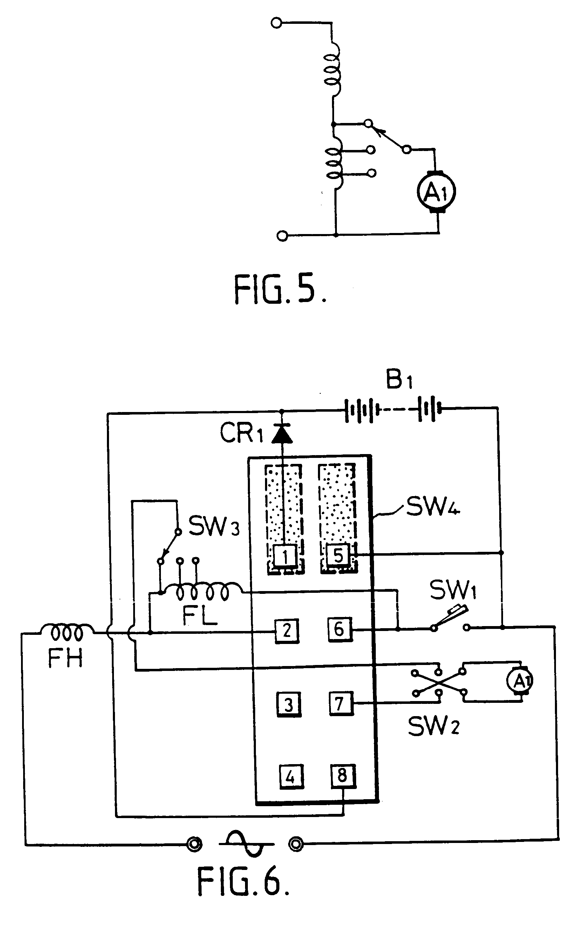

Another, auto-coupling coil type voltage drop field winding installed as shown in Figs. 1 and 2 can further be made into multiple-set speed change draw head circuit by means of auto-coupling coil or low voltage winding as shown in Fig. 5; under supply of high voltage AC power, torsion (or speed) modulation is obtained by means of switching the relationship between armature and aforesaid draw head; again, the control of motor's positive/reversal rotation as shown in Figs. 1 to 5 is as the same as populared DC machine, that it can be made by means of field revers- edly connecting head/tail of one coil; the control and modulation of positive/reversal rotational speed (or torsion) is provided and applicable to high voltage AC and low voltage DC power etc. Besides, auto-coupling coil type voltage drop field winding and low voltage field winding as mentioned in Figs. 1 to 5 are installed by means of co-polarity to obtain an even field thereof.

In Fig. 6, motor as shown in Figs. 1 and 2 is applied to high voltage AC and low voltage DC dual purposes with recharging function. In which, SW1 is operating switch to turn motor ON/OFF ; SW2 is positive/reversal rotation switch to control motor's positive/reversal rotation depending on requirement; SW3 is governed switch to select what rotational speed as required; commutator CR1 is provided for recharging rechargeable battery B1; rechargeable battery B1 is provided for power supply to low voltage DC drive; auto-coupling voltage drop field winding FH and low voltage field winding FL are to form auto-coupling transforming effect to provide low voltage recharging power and drive and armature A1; the selection of operation function is provided by SW4 which is slide switch having joint foot 1 - 8 respectively and each four line on either side separately; two sheets of sliding conductor are lined on the left and right to be insulated each other; sliding conductor once staying at any position may conduct two sets of joint foot on the same side, which can stay at four positions and respectively provide OFF <-->RECHARGING <-->HIGH VOLTAGE AC OPERATION<-->LOW VOLTAGE DC OPERATION.

In Fig. 6, the circuit is under OFF state and motor has no function at this moment.

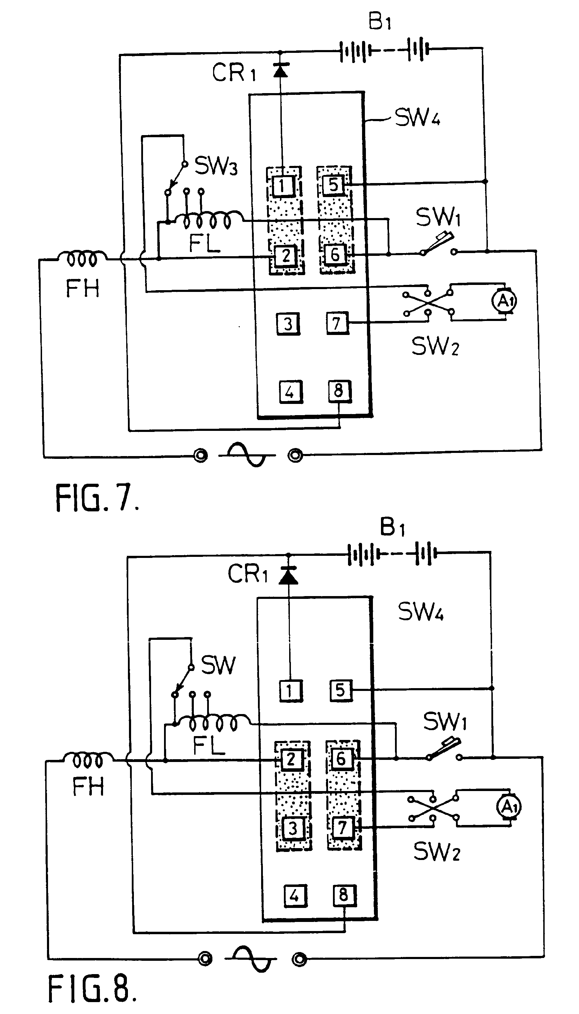

In Fig. 7, it shows under recharging state contact points 1 and 2 on SW4 is conducted and points 5 and 6 also are conducted too and auto-coupling voltage drop transformer consists of FH and FL to enable low voltage current passing through commutator CR1 to recharge battery B1. (CR1 may cascade necessary limit elements if require).

In Fig. 8, high voltage AC series excitation drive, contact points 6 and 7 of SW4 are conducted too; depress SW1 to drive motor thereof.

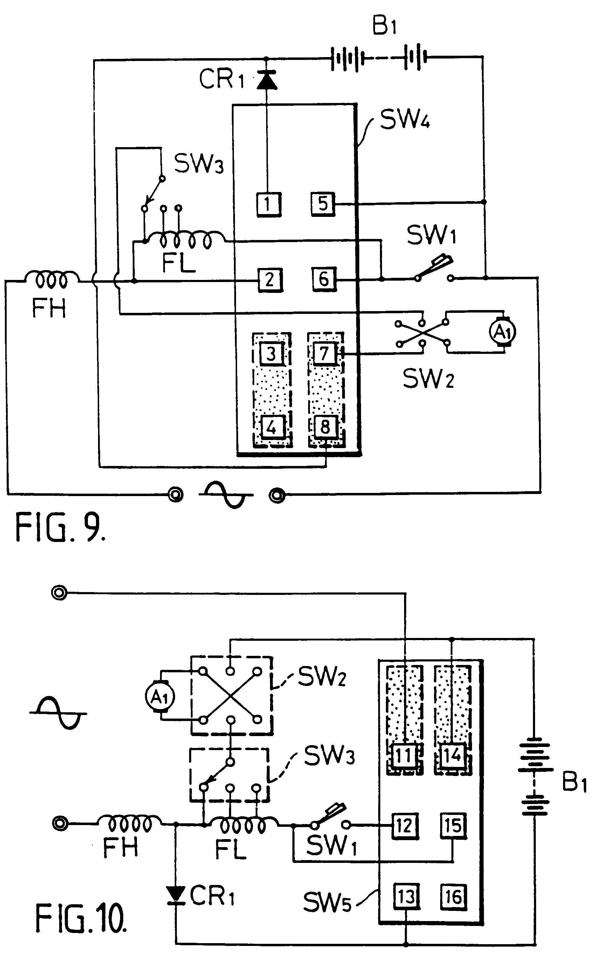

In Fig. 9, low voltage DC drive, contact points 7 and 8 of SW4 are conducted too; power supply of battery B1 to FL and A1 is switched ON/OFF by means of SW1, SW2, SW3 to be engaged in low voltage DC drive.

In Fig. 10, motor as shown in Figs. 1 and 2 is applied to dual purposes including high voltage AC with recharging function and low voltage DC. In which, SW1 is an operational switch to control motor ON or OFF; SW2 is a switch to control motor rotating in positive or reversal way as required; SW3 is a governed switch which is to select which rotational speed; commutator CR1 is provided for recharging battery B1; rechargeable bettery B1 is provided power supply for low voltage DC drive; auto-coupling voltage drop field winding FH and low-voltage field winding FL form auto-coupling transforming effect to provide power supply for low voltage recharging and driving armature A1; SW5 provides selection of operation function for it; SW5 is a sliding switch, having joint foot 11 - 16, and each three of them line on either side of SW5; two sliding conductors line on the right and left separately and insluate each other; wherever sliding conductor stays it can conduct two sets of joint foot on the same side; it can stay at three positions to provide the function respectively as such: OFF <--> RECHARGING & HIGH VOLTAGE AC OPERATION <--> LOW VOLTAGE DC OPERATION.

In fig. 10, the circuit is under OFF state, and motor has no function at this moment.

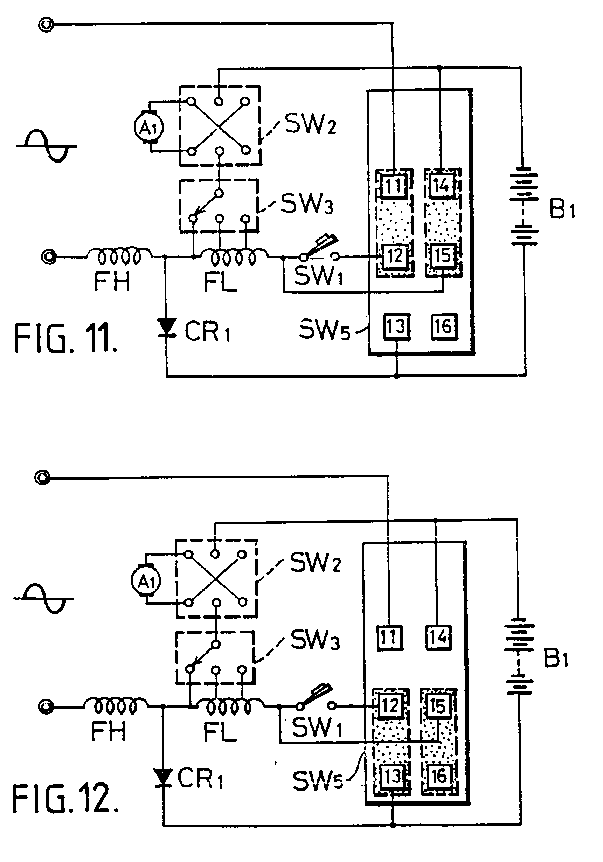

In Fig. 11, a recharging state, contact points 11 and 12 of SW5 are conducted too including 14 and 15; auto-coupling transformer consists of FH and FL to enable low voltage current flowing through commutator CR1 to recharge battery B1 and drive armature A1; depress SW1 allows to drive motor thereof.

In Fig. 12, low voltage DC series excitation drive, contact points 12 and 13 of SW5 are conducted including 15 and 16 too at this moment; control switch SW1, SW2 and SW3 switch ON or OFF battery B1 power supply to FL and A1 to be engaged in low voltage DC drive.

Not only aforesaid rechargeable low voltage winding is engaged in auto-coupling type voltage drop by means of low voltage field winding, but also we can add another independent rechargeable twice winding to field metal core in substitute for practical application.

To conclude what mentioned above, the present invention relates to an improvement of DC motor which not only provides dual purpose for aforesaid motor being engaged in high voltage AC and low voltage DC by means of additional co-polarity series auto-coupling winding with smaller linear diameter than that of the low voltage field winding being added to the field, and further provides output of torque (or speed) modulation, as well as offers recharging function and moreover expand applicable scope by means of auto-coupling winding draw head.

## Claims

1. An electric motor arrangement comprising an armature winding (A1), two field windings (FH,FL) connected in series to an AC power supply circuit, a battery charging circuit comprising a rechargeable battery (B1) and a rectifier (CR1), and switching means (SW4,SW1,SE5,SW1) having:
a first switching position in which the rechargeable battery is connected to the AC supply circuit;
a second switching position in which the motor is energised by the AC power supply circuit;
a third switching position in which the field winding (FL) and armature winding (A1) are energised in series by the rechargeable battery, the other field winding (FH) being not energised, characterized in that one of said field windings (FL) is a low-voltage field winding, and the other field winding (FH) is a high-voltage field winding, the linear diameter of said high-voltage field winding (FH) being of a smaller diameter and that in the second switching position the armature winding is energised in parallel with the low voltage field winding(FL) and the high voltage field winding (FH) is connected in co-polarity series with the low voltage field winding (FL) to form auto-coupling transformer effect.

2. An electric motor arrangement as claimed in claim 1, wherein said switching means (SW1, SW4; SW1, SW5) comprises first and second contacts (1,5) connected across free terminals of the battery charging circuit; third and fourth contacts (2,6) connected to the terminals of said low voltage field winding; a fifth contact (7) connected to a free terminal of said armature winding, and a sixth contact (8) which is connected to the terminal of said rechargeable battery which is of opposite polarity to the free terminal of said low voltage field winding (FL) when said low-voltage field winding and armature winding (A1) are energised by said rechargeable battery in said third switching position of said switching means, wherein:
i) in said first switching position each of said first and second contacts (1,5) is connected to a respective one of the third and fourth contacts (2,6);
ii) in said second switching position that third or fourth contact (6) which is connected to the free terminal of said low voltage field winding is connected to said fifth contact (7), and iii) in said third switching position said fifth contact (7) is connected to said sixth contact (8).

3. An electric motor arrangement as claimed in claim 1 wherein said battery-charging circuit is connected between the junction of said field windings (FH,FL) and a free terminal of said armature winding (A1), and said switching means (SW1,SW5) comprises a seventh contact (11) which is connected to a terminal of said A.C. power supply circuit; an eighth contact (14) which is connected to said free terminal of said armature winding; a ninth contact (12) which is connected via a switch (SW1) to a free terminal of said low-voltage field winding; a tenth contact (15) which is connected to said free terminal of said low-voltage field winding and an elevanth contact (13) which is connected to that terminal of said rechargeable battery which is of opposite polarity to said eight contact (14) when said low-voltage field winding (FL) and armature winding (A1) are energised by said rechargeable battery (B1) in said third switching position of said switching means, wherein:
i) in said first switching position said eighth contact (14) is connected to said tenth contact (15) and said seventh contact (11) is connected to said ninth contact (12);
ii) said second switching position differs from said first switching position in that said switch (SW1) is closed, and
iii) in said third switching position said ninth contact (12) is connected to said eleventh contact (13).

4. An electric motor arrangement according to claim 2 wherein said switching means (SW4,SW1) further comprises a switch (SW1) connected in series with said field windings (FH,FL) in said A.C. power supply circuit.

5. An electric motor arrangement according to any preceding claim wherein said switching means (SW4,SW1 ;SW5,SW1) comprises a slider switch (SW4;SW5) having an "OFF" position in which none of said contacts (1-16) are connected by the slider of the slider switch.

6. An electric motor arrangement according to any preceding claim wherein said low voltage field winding (FL) has a plurality of tappings which can be selected by further switching means (SW3).

7. An electric motor arrangement according to any preceding claim wherein said armature winding (A1) is provided with a reversing switch (SW2).

## Patentansprüche

1. Elektromotorauslegung, welche eine Ankerwicklung (A1), zwei Feldwicklungen (FH, FL), welche in Serie mit einer Wechselstrom-Versorgungsschaltung geschaltet sind, eine Batterieaufladeschaltung, welche eine wiederaufladbare Batterie (B1) und einen Gleichrichter (CR1) aufweist, und eine Schalteinrichtung (SW4, SW1, SE5, SW) aufweist, welche folgendes hat:
eine erste Schaltposition, in welcher die wiederaufladbare Batterie mit der Wechselstrom-Versorgungsschaltung verbunden ist;
eine zweite Schaltposition, in welcher der Motor durch die Wechselstrom-Versorgungsschaltung betrieben wird;
eine dritte Schaltposition, in welcher die Feldwicklung (FL) und die andere Wicklung (A1) in Serie durch die wiederaufladbare Batterie betrieben sind, wobei die andere Feldwicklung (FR) nicht betrieben ist, dadurch gekennzeichnet, daß eine der Feldwicklungen (FR) eine Niederspannungs-Feldwicklung ist, und die andere Feldwicklung (FH) eine Hochspannungs-Feldwicklung ist, der lineare Durchmesser der Hochspannungs-Feldwicklung (FH) einen kleineren Durchmesser hat, und daß in der zweiten Schaltposition die Ankerwicklung parallel zu der Niederspannungs-Feldwicklung (FL) betrieben wird und die Hochspannungs-Feldwicklung (FH) in Serienschaltung mit Kopolung mit der Niederspannungs-Feldwicklung (FL) verbunden ist, um einen automatisch koppelnden Transformatoreffekt zu erhalten.

2. Elektromotorauslegung nach Anspruch 1, bei der die Schalteinrichtung (SW1, SW4; SW1, SW5) erste und zweite Kontakte (1, 5) aufweist, die an freien Anschlüssen mit der Batterie-Aufladeschaltung verbunden sind; ferner dritte und vierte Kontakte (2, 6) aufweist, die mit den Anschlüssen der Niederspannungs-Feldwicklung verbunden sind; sowie einen fünften Kontakt (7), welcher mit einem freien Anschluß der Ankerwicklung verbunden ist, und einen sechsten Kontakt (8), welcher mit dem Anschluß der wiederaufladbaren Batterie verbunden ist, welche entgegengesetzt zu dem freien Anschluß der Niederspannungs-Feldwicklung (FL) gepolt ist, wenn die Niederspannungs-Feldwicklung und die Ankerwicklung (A1) durch die wiederaufladbare Batterie in der dritten Schalterposition der Schalteinrichtung betrieben wird, wobei folgendes gilt:
i) in der ersten Schalterposition ist jeder der ersten und zweiten Kontakte (1, 5) jeweils mit einem der zugeordneten dritten und vierten Kontakte (2, 6) verbunden;
ii) in der zweiten Schalterposition ist der dritte oder vierte Kontakt (6), welche mit dem freien Anschluß der Niederspannungs-Feldwicklung verbunden ist, mit dem fünften Kontakt (7) verbunden, und
iii) in der dritten Schalterstellung ist der fünfte Kontakt (7) mit dem sechsten Kontakt (8) verbunden.

3. Elektromotorauslegung nach Anspruch 1, bei der die Batterieladeschaltung zwischen der Verbindungsstelle der Feldwicklungen (FH, FL) und einem freien Anschlu ß der Ankerwicklu ng (A1) vorgesehen ist, und die Schalteinrichtung (SW1, SW5) einen siebten Kontakt (11) aufweist, welcher mit einem Anschluß der Wechselstrom-Versorgungsschaltung verbunden ist; sowie einen achten Kontakt (14), welcher mit dem freien Anschluß der Ankerwicklung verbunden ist; einen neunten Kontakt (12), welcher über einen Schalter (SW1) mit einem freien Anschluß der Niederspannungs-Feldwicklung verbunden ist; einen zehnten Kontakt (15), welcher mit dem freien Anschluß der Niederspannungs-Feldwicklung verbunden ist, und einen elften Kontakt (13), welcher mit jenem Anschluß der wiederaufladbaren Batterie verbunden ist, welcher die entgegengesetzte Polarität zu dem achten Kontakt (14) hat, wenn die Niederspannungs-Feldwicklung (FL) und die Ankerwicklung (A1) durch die wiederaufladbare Batterie (B1) in der dritten Schalterposition der Schalteinrichtung betrieben werden, wobei folgendes gilt:
i) in der ersten Schalterposition ist der achte Kontakt (14) mit dem zehnten Kontakt (15) und der siebte Kontakt (11) mit dem neuen Kontakt (12) verbunden;
ii) die zweite Schalterposition unterscheidet sich von der ersten Schalterposition dadurch, daß der Schalter (SW1) geschlossen ist, und
iii) in der dritten Schalterposition ist der neunte Kontakt (12) mit dem elften Kontakt (13) verbunden.

4. Elektromotorauslegung nach Anspruch 2, bei der die Schaltereinrichtung (SW4, SW1) ferner einen Schalter (SW1) aufweist, der in Serie mit den Feldwicklungen (FH, FL) in der Wechselstromversorgungsschaltung geschaltet ist.

5. Elektromotorauslegung nach einem dervorangehenden Ansprüche, bei der die Schaltereinrichtung (SW4, SW1; SW5, SW1) einen Schiebeschalter (SW4; SW5) aufweist, welcher eine "AUS" Position hat, in welcher keiner der Kontakte (1 - 16) durch den Schieber des Schiebekontaktes in Anschlußverbindung ist.

6. Elektromotorauslegung nach einem der vorangehenden Ansprüche, bei der die Niederspannungs-Feldwicklung (FL) eine Mehrzahl von Abgriffen hat, welche durch eine weitere Schalteinrichtung (SW3) wählbar sind.

7. Elektromotorauslegung nach einem dervorangehenden Ansprüche, bei der die Ankerwicklung (A1) mit einem Umkehrschalter (SW2) versehen ist.

## Revendications

1. Moteur électrique comportant un enroulement d'armature (A1), deux enroulements de champ (FH, FL) connectés en série à un circuit d'alimentation en courant alternatif, un circuit de chargement de batterie comportant une batterie rechargeable (B1) et un redresseur (CR1), et des moyens de commutation (SW4, SW1, SES, SW1) comportant :
- une première position de commutation dans laquelle la batterie rechargeable est connectée au circuit d'alimentation en courant alternatif,
- une seconde position de commutation dans laquelle le moteur est alimenté par le circuit d'alimentation en courant alternatif,
- une troisième position de commutation dans laquelle l'enroulement de champ (FL) et l'enroulement d'armature (A1) sont alimentés en série par la batterie rechargeable, l'autre enroulement de champ (FH) n'étant pas alimenté ; caractérisé en ce que l'un des enroulements de champ (FL) est un enroulement de champ basse tension, et l'autre enroulement de champ (FH) est un enroulement de champ haute tension, le diamètre linéaire de l'enroulement de champ haute tension (FH) étant un diamètre plus petit, et en ce que dans la seconde position de commutation l'enroulement d'armature est alimenté en parallèle avec l'enroulement de champ basse tension (FL), et l'enroulement de champ haute tension (FH) est connecté en série en copola- rité avec l'enroulement de champ basse tension (FL) pour engendrer un effet de transformateur à autocouplage.

2. Moteur électrique selon la revendication 1, caractérisé en ce que les moyens d'interrupteur (SW1, SW4 ; SW1, SW5) comportent des premier et second contacts (1, 5) connectés à travers des bornes libres du circuit de chargement de batterie, des troisième et quatrième contacts (2, 6) connectés aux bornes de l'enroulement de champ basse tension, un cinquième contact (7) connecté à une borne libre de l'enroulement d'armature, et un sixième contact (8) connecté à la borne de la batterie rechargeable qui est de polarité opposée à la borne libre de l'enroulement de champ basse tension (FL) lorsque l'enroulement de champ basse tension et l'enroulement d'armature (A1) sont alimentés par la batterie rechargeable dans la troisième position de commutation des moyens de commutation, et en ce que :
(i) dans la première position de commutation chacun des premier et second contacts (1, 5) est connecté respectivement à l'un des troisième et quatrième contacts (2, 6),
(ii) dans la seconde position de commutation celui du troisième ou quatrième contact (6) qui est connecté à la borne libre de l'enroulement de champ basse tension est connecté au cinquième contact (7), et
(iii) dans la troisième position de commutation le cinquième contact (7) est connecté au sixième contact (8).

3. Moteur électrique selon la revendication 1, caractérisé en ce que le circuit de chargement de batterie est connecté entre la jonction des enroulements de champ (FH, FL) et une borne libre de l'enroulement d'armature (A1), et les moyens d'interrupteur (SW1, SW5) comportent un septième contact (11) qui est connecté à une borne du circuit d'alimentation en courant alternatif, un huitième contact (14) qui est connecté à la borne libre de l'enroulement d'armature, un neuvième contact (12) qui est connecté via un interrupteur (SW1) à une borne libre de l'enroulement de champ basse tension, un dixième contact (15) qui est connecté à la borne libre de l'enroulement de champ basse tension, et un onzième contact (13) qui est connecté à la borne de la batterie rechargeable de polarité opposée au huitième contact (14) lorsque l'enroulement de champ basse tension (FL) et l'enroulement d'armature (A1) sont alimentés par la batterie rechargeable (B1) dans la troisième position de commutation des moyens de commutation, et en ce que :
(i) dans la première position de commutation le huitième contact (14) est connecté au dixième contact (15) et le septième contact (11) est connecté au neuvième contact (12),
(ii) la seconde position de commutation diffère de la première position de commutation en ce que le commutateur (SW1) est fermé, et
(iii) dans la troisième position de commutation le neuvième contact (12) est connecté au onzième contact (13).

4. Moteur électrique selon la revendication 2, caractérisé en ce que les moyens de commutation (SW4, SW1) comportent en outre un commutateur (SW1) connecté en série avec les enroulements de champ (FH, FL) dans le circuit d'alimentation en courant alternatif.

5. Moteur électrique selon l'une quelconque des revendications précédentes, caractérisé en ce que les moyens de commutation (SW4, SW1 ; SW5, SW1) comportent un commutateur glissant (SW4, SW5) ayant une position « ARRET » dans laquelle aucun des contacts (1 à 16) n'est connecté par l'élément glissant de commutateur glissant.

6. Moteur électrique selon l'une quelconque des revendications précédentes, caractérisé en ce que l'enroulement de champ basse tension (FL) a une pluralité de prises qui peuvent être sélectionnés par d'autres moyens de commutation (SW3).

7. Moteur électrique selon l'une quelconque des revendications précédentes, caractérisé en ce que l'enroulement d'armature (A1) est pourvu d'un commutateur d'inversion (SW2).
